# EUROPEAN PATENT SPECIFICATION

(11) **EP 2 241 658 B1**
(45) Date of publication and mention of the grant of the patent: **20.06.2012**
(21) Application number: 09157962.3
(22) Date of filing: 15.04.2009
(51) Int. Cl.: D01D 5/247, D01D 10/02, D01F 1/10, D01F 9/12, D01F 9/14, D01D 5/00, H01M 4/88, H01M 8/10

(54) **Fabrication method for porous carbon fibers**
Herstellungsverfahren für poröse Kohlefasern
Procédé de fabrication de fibres de carbone poreuses

(43) Date of publication of application: 20.10.2010
(73) Proprietor: Korea Advanced Institute of Science and Technology, Daejeon, 305-701 (KR)
(72) Inventor: Hong, Soon Hyung, 305-701, Daejeon (KR); Jeong, Yong Jin, 305-701, Daejeon (KR); Lee, Kyong Ho, 305-701, Daejeon (KR); Mo, Chan Bin, 305-701, Daejeon (KR)
(74) Representative: Becker Kurig Straus

(56) References cited:
- EP-A- 1 813 701
- US-A- 4 434 206
- US-A1- 2007 134 151
- US-A1- 2008 251 971

## Description

### BACKGROUND OF THE INVENTION

### 1. Field of the Invention

The present invention relates to a method for fabrication of porous carbon fibers, and more particularly, to a method for fabrication of porous carbon fibers, comprising: preparing starch composite fibers using eco-friendly and economically advantageous natural polymers such as starch; oxidation heating the prepared starch composite fibers; and executing carbonization and vacuum heat treatment of the treated fibers. Such fabricated porous carbon fibers contain a great amount of mesopores as a porous structure readily penetrable by electrolyte. Accordingly, the porous carbon fibers of the present invention are suitable for manufacturing electrodes with high electric capacity.

### 2. Description of the Related Art

A great deal of studies and investigation into electrode materials for super capacitors are underway and such super capacitors using activated carbon have been commercially available in Japan since early 1980s. However, such studies substantially presently face technical limitations, while research and development for oxide electrodes are being continued centering around the United States and Japan.

Researches for carbon nanotube composite materials for electrode materials useful for super capacitors are being actively executed by advanced countries including the United States and Japan. These are mostly directed to use of carbon nanotube itself as an electrode material and/or preparation of carbon nanotube composite materials. Such a carbon nanotube composite material is prepared by mixing carbon nanotubes with activated carbon, which is widely used as an electrode material for a super capacitor, and/or depositing carbon nanotubes with metal oxides such as RuO₂ or IrO₂ or conductive polymer such as polyaniline.

There are presently active efforts to manufacture electrode materials for an electric double layer type super capacitor using activated carbon with less cost burden. However, capacitance per unit weight of an electrode made of carbon nanotube composite material is still considerably lower than those of existing metal oxides (700F/g) and conductive polymer (500F/g). Accordingly, there is a strong requirement for development of a novel carbon nanotube composite material based electrode using activated carbon with improved capacitance per unit weight thereof.

### SUMMARY OF THE INVENTION

Accordingly, the present invention has been proposed to solve conventional problems described above and an object of the present invention is to provide a method for fabrication of porous carbon fibers, having a great amount of mesopores as a porous structure readily penetrable by electrolyte.

Another object of the present invention is to provide use of the porous carbon fiber fabricated according to the present invention in manufacturing an electrochemical electrode.

In order to achieve the above objects of the present invention, there is provided a method for fabrication of porous carbon fibers comprising : (a) processing starch to prepare a gelled starch solution; (b) adding organic acid to the gelled starch solution to prepare a starch solution; (c) dissolving carbon nanotubes in a solvent and adding fiber formable polymer thereto to prepare a carbon nanotube/fiber formable polymer solution; (d) mixing the starch solution of step (b) with the carbon nanotube/fiber formable polymer solution of step (c) to prepare a carbon nanotube/starch/fiber formable polymer solution wherein the fiber formable polymer is added to the starch in a ratio of percent (%) by weight of 5:5 to 8:2 for starch: fiber formable polymer ; (e) electro-spinning or wet-state spinning the prepared carbon nanotube/starch/fiber formable polymer solution to produce starch composite fibers; and (f) oxidation heating the starch composite fibers, then, executing carbonization and vacuum heat treatment of the heated fibers, so as to fabricate the porous carbon fibers.

According the present invention, such fabricated porous carbon fiber exhibits high specific surface area and excellent electrochemical properties such as high capacitance. The porous carbon fiber also contains a great amount of mesopores having an average diameter ranging from 5 to 10nm, through which electrolyte is easily penetrated, thereby being favorably used as an electrode material.

### BRIEF DESCRIPTION OF THE DRAWINGS

These and other objects, features, aspects, and advantages of the present invention will be more fully described in the following detailed description of preferred embodiments and examples, taken in conjunction with the accompanying drawings. In the drawings:
Fig. 1 is schematic view illustrating an essential concept for a mesoporous carbon fiber according to the present invention;
Fig. 2A is a scanning electron microscopic (SEM) photograph of starch composite fibers according to the present invention;
Fig. 2B is an enlarged SEM photograph of one of the starch composite fibers shown in Fig. 2A;
Fig. 3 is a SEM photograph of porous carbon fibers having mesopores with a size of 10nm;
Fig. 4 is a graph illustrating discharge current density depending on applied voltage for a porous carbon fiber having mesopores with a size of 10nm;
Fig. 5A is a SEM photograph of porous carbon fibers coated with platinum (Pt) nanoparticles; and
Fig. 5B a graph illustrating EDAX analysis results of the porous carbon fibers coated with Pt nanoparticles shown in Fig. 5A.

### DETAILED DESCRIPTION OF THE INVENTION

The present invention provides a method for fabricating porous carbon fibers, which comprises : (a) processing starch to prepare a gelled starch solution; (b) adding organic acid to the gelled starch solution to prepare a starch solution; (c) dissolving carbon nanotubes in a solvent and adding fiber formable polymer thereto to prepare a carbon nanotube/fiber formable polymer solution; (d) mixing the starch solution of step (b) with the carbon nanotube/fiber formable polymer solution of step (c) to prepare a carbon nanotube/starch/fiber formable polymer solution wherein the fiber formable polymer is added to the starch in a ratio of percent (%) by weight of 5:5 to 8:2 for starch : fiber formable polymer; (e) electro-spinning or wet-state spinning the prepared carbon nanotube/starch/fiber formable polymer solution to produce starch composite fibers; and (f) oxidation heating the starch composite fibers, then, executing carbonization and vacuum heat treatment of the heated fibers, so as to fabricate the porous carbon fibers.

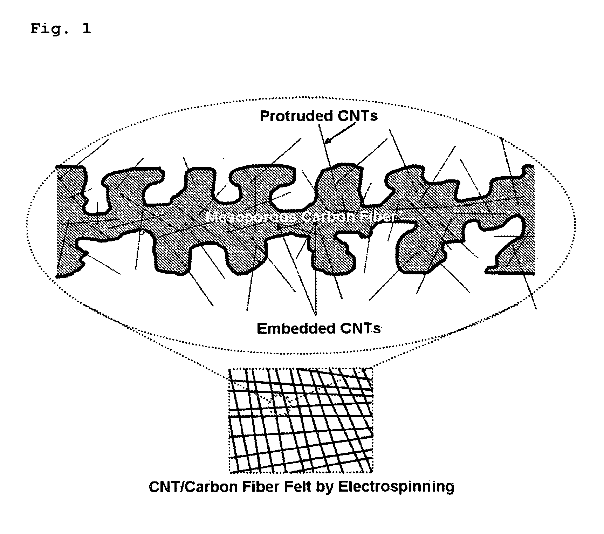

The porous carbon fiber fabricated as described above is shown in Fig. 1 which is an essential concept diagram illustrating the mesoporous carbon fiber of the present invention.

The processing in step (a) may include heating starch at 100 to 150□ and then cooling the same to room temperature. It is known that starch has crystalline and amorphous nanosized structures alternately laminated to one another.

Accordingly, in order to fabricate a porous carbon fiber having mesopores in great amount, starch must undergo gelation thereof.

The organic acid in step (b) is at least one selected from a group consisting of p-toluenesulfonic acid, methanesulfonic acid, trifluoromethanesulfonic acid, alkylbenzenesulfonic acid and p-aminobenzenesulfonic acid.

Such organic acid may be used alone or in combination of two or more thereof.

The solvent in step (c) is at least one selected from a group consisting of water, ethanol, methanol, dichloromethanol, isopropanol, acetone and hexafluoroisopropanol (HFIP). Such solvent may be used alone or in combination of two or more thereof.

The fiber formable polymer in step (c) is at least one selected from a group consisting of polyvinyl alcohol, polyethylene oxide, polycarboate, polylactic acid, polyvinylcarbazole, polymethacrylate, cellulose acetate, collagen, polycaprolactone and poly(2-hydroxyethyl methacrylate). Such fiber formable polymer may be used alone or in combination of two or more thereof.

The fiber formable polymer is added to the starch, in a ratio of percent (%) by weight of 5:5 to 8:2 for starch : fiber formable polymer.

Then, the oxidation heating in step (f) is preferably executed at 150 to 300°C, while the carbonization may be conducted at 500 to 1,400°C under vacuum or an inert gas atmosphere. Also, the vacuum heat treatment in step (f) may be conducted at 1,400 to 2,200°C.

The starch composite fiber obtained through addition of the organic acid in step (b) has desired resistance to oxidation heating and vacuum heat treatment and exhibits improved carbonizing rate owing to carbonization.

The porous carbon fiber may include mesopores having an average diameter ranging from 5 to 10nm in large amount.

The present invention also provides a felt including the porous carbon fiber fabricated as described above.

The present invention provides use of the fabricated porous carbon fiber in manufacturing an electrode for a super capacitor having high capacitance.

The present invention further provides use of the fabricated porous carbon fiber in manufacturing an electrode for a fuel cell.

Hereinafter, preferred embodiments of the present invention will be described in detail in the following examples which are given for illustrative purposes only and should not be construed as limiting the spirit and scope of the invention.

### EXAMPLE 1

### Preparation of starch composite fiber

After dissolving 2g of starch in 30ml of water, the solution was heated and boiled at 100 to 150°C. The heated starch was cooled to room temperature and stored in an incubator at a low temperature of 5°C to prepare a gelled starch solution. Then, 0.2mmol of p-toluenesulfonic acid as an organic acid was added to the gelled starch solution to obtain a starch solution.

Next, 0.02g of carbon nanotubes and 0.02g of NaDDBS as a dispersant were introduced to 20ml of water, followed by ultrasonic treatment to prepare a homogeneous mixture.

Since starch has fiber formation resistance, a desired dispersant such as NaDDBS is required to fabricate starch composite fibers through the electro-spinning process.

Afterward, 2g of polyvinyl alcohol (PVA) as the fiber formable polymer was further added thereto to obtain a carbon nanotube/PVA solution.

Subsequently, the gelled starch solution was mixed with the above carbon nanotube/PVA solution to prepare a carbon nanotube/starch/PVA solution. This carbon nanotube/starch/PVA solution was found to have a viscosity in the range of 300 to 1,500cP.

Finally, the resulting carbon nanotube/starch/PVA solution was charged in a syringe. High voltage (10 to 30kV) was applied to the syringe, followed by spinning the same through spinning nozzles to produce starch composite fibers. A distance between the spinning nozzle and a spinneret ranges from 15 to 20cm.

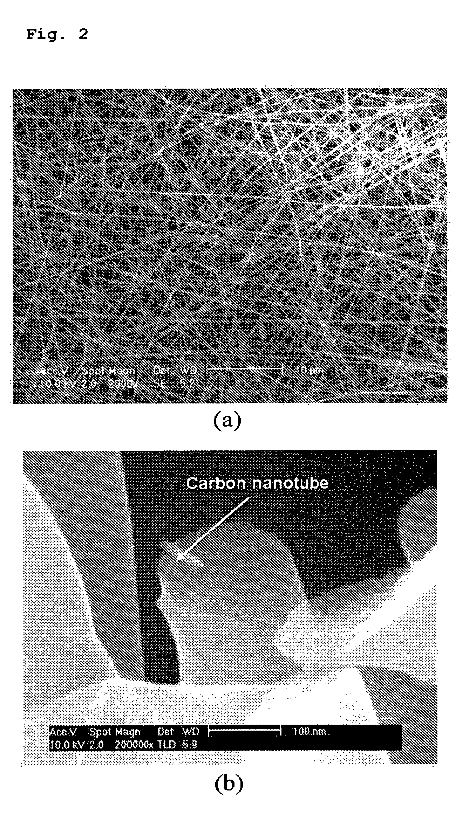

Fig. 2 shows SEM photographs of starch composite fibers fabricated as described above, especially, Fig. 2A is a SEM photograph of the fabricated starch composite fibers while Fig. 2B is an enlarged SEM photograph of one of the starch composite fibers shown in Fig. 2A.

### EXAMPLE 2

### Fabrication of porous carbon fiber

The starch composite fibers fabricated in Example 1 were stabilized by an oxidation heating process at 150 to 300°C. Then, the treated fibers were carbonized at 500 to 1,400°C under vacuum or an inert gas atmosphere to produce porous carbon fibers.

Next, the prepared porous carbon fibers were subjected to vacuum heat treatment at 1,400 to 2,200°C, finally resulting in porous carbon fibers with an average pore size of 10nm. The porous carbon fiber product obtained in the above temperature range was found to have a specific surface area ranging from 320 to 480m²/g.

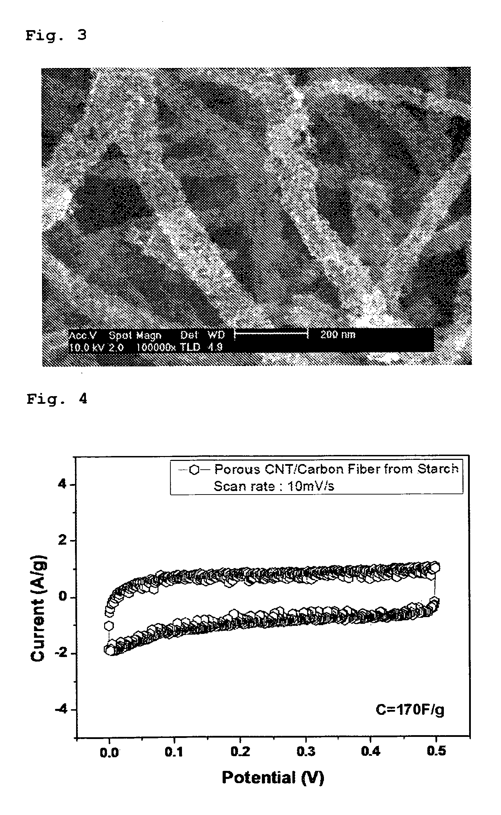

Fig. 3 is a SEM photograph of porous carbon fibers having mesopores with a size of 10nm.

### EXAMPLE 3

The porous carbon fiber fabricated in Example 2 was cut in a dimension of 1cm×1cm and subjected to measurement of specific capacitance of an electric double layer type super capacitor. In this regard, the porous carbon fiber itself was an electrode of the super capacitor and 1mol of sulfuric acid solution was used as electrolyte. Charge/discharge voltage ranged from 0.0 to 0.5V and, as a result of calculating the specific capacitance by an equation of C=I (△V)/(△t), the specific capacitance of the above super capacitor was 170F/g.

Fig. 4 is a graph illustrating discharge current density depending on applied voltage for the porous carbon fiber used above. It can be seen that the graph has substantially an ideal rectangular shape.

### EXAMPLE 4

### Fabrication of porous carbon fiber coated with Pt nanoparticles

A felt made of the porous carbon fibers fabricated in Example 2 was cut in a dimension of 1cm×1cm and subjected to sputtering of Pt nanoparticles. As a result, porous carbon fibers coated with Pt nanoparticles were obtained.

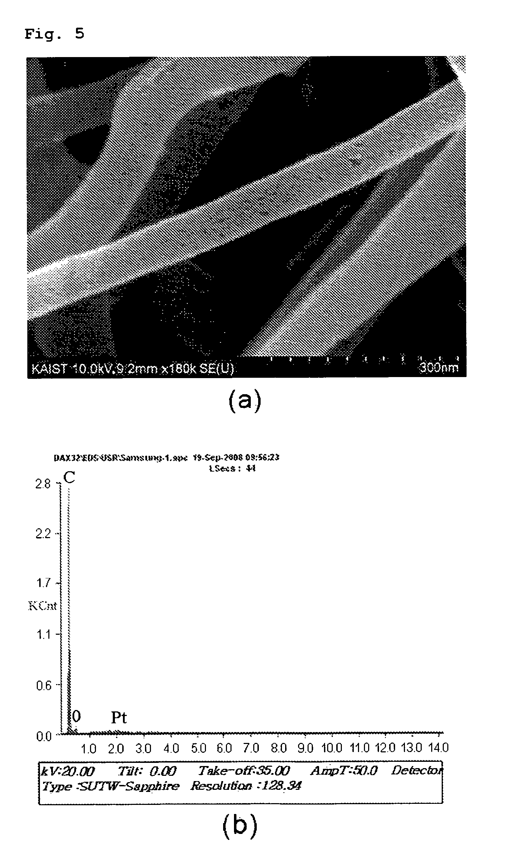

Fig. 5A is a SEM photograph of porous carbon fibers coated with Pt nanoparticles, which were fabricated in Example 4, and Fig. 5B illustrates EDAX analysis results of the same. From the EDAX results shown in Fig. 5B, it can be seen that the surface of the carbon fiber is coated with Pt nanoparticles.

Although an electro-spinning process was used in the above example, it is of course possible to adopt a wet-state spinning process in place of the electro-spinning process.

As is apparent from the above disclosure, the present invention provides porous carbon fibers fabricated using fiber formation resistant starch. Comparing to a conventional technique, which uses fiber formable polymer such as PAN or pitch based polymer in fabricating carbon fibers, the porous carbon fibers of the present invention exhibit excellent electro-chemical properties including high capacitance, as well as high specific surface area.

Briefly, the present invention provides a method for fabrication of carbon fibers from starch through electro-spinning or wet-state spinning wherein the starch is an eco-friendly and economically advantageous natural polymer having fiber formation resistance. The inventive method may produce porous carbon fibers containing a great amount of mesopores having an average diameter of 10nm by controlling carbonization. Consequently, the porous carbon fibers fabricated by the present invention may overcome conventional limitations of existing activated carbon fibers having micropores of less than 1nm in large amount, which seldom allow penetration of electrolyte.

In addition, the porous carbon fibers of the present invention may be used in a wide range of applications including, for example, fuel cell electrodes as well as electrodes for super capacitors requiring high specific surface area and high electric conductivity, thereby exhibiting considerably improved industrial applicability.

## Claims

1. A method for fabricating porous carbon fibers comprising:
(a) processing starch to prepare a gelled starch solution;
(b) adding organic acid to the gelled starch solution to prepare a starch solution;
(c) dissolving carbon nanotubes in a solvent and adding fiber formable polymer thereto to prepare a carbon nanotube/fiber formable polymer solution;
(d) mixing the starch solution of step (b) with the carbon nanotube/fiber formable polymer solution of step (c) to prepare a carbon nanotube/starch/fiber formable polymer solution, wherein the fiber formable polymer is added to the starch, in a ratio of percent (%) by weight of 5 : 5 to 8 : 2 for starch : fiber formable polymer;
(e) electro-spinning or wet-state spinning the prepared carbon nanotube/starch/fiber formable polymer solution to produce starch composite fibers;
(f) oxidation heating the starch composite fibers, then, executing carbonization and vacuum heat treatment of the heated fibers, so as to fabricate the porous carbon fibers.

2. The method according to claim 1, wherein the processing in step (a) includes heating starch at 100 to 150°C and then cooling the same to room temperature.

3. The method according to claim 1, wherein the organic acid in step (b) is at least one selected from a group consisting of p-toluene sulfonic acid, methane sulfonic acid, trifluoromethane sulfonic acid, alkylbenzene sulfonic acid and p-aminobenzene sulfonic acid.

4. The method according to claim 1, wherein the solvent in step (c) is at least one selected from a group consisting of water, ethanol, methanol, dichloromethanol, isopropanol, acetone and hexafluoroisopropanol (HFIP).

5. The method according to claim 1, wherein the fiber formable polymer in step (c) is at least one selected from a group consisting of polyvinyl alcohol, polyethylene oxide, polycarboate, polylactic acid, polyvinylcarbazole, polymethacrylate, cellulose acetate, collagen, polycaprolactone and poly(2-hydroxyethyl methacrylate).

6. The method according to claim 1, wherein the oxidation heating in step (f) is executed at 150 to 300°C.

7. The method according to claim 1, wherein the carbonization in step (f) is executed at 500 to 1,400°C under vacuum or an inert gas atmosphere.

8. The method according to claim 1, wherein the vacuum heat treatment in step (f) is executed at 1,400 to 2,200°C.

9. The method according to claim 1, wherein the porous carbon fiber has a great amount of mesopores with an average diameter ranging from 5 to 10nm.

10. A porous carbon fiber fabricated by the method as set forth in any one of claims 1 to 9.

11. A felt including the porous carbon fiber as set forth in claim 10.

12. Use of the porous carbon fiber as set forth in claim 10 in manufacturing an electrode for a super capacitor having high capacitance.

13. Use of the porous carbon fiber as set forth in claim 10 in manufacturing an electrode for a fuel cell.

## Patentansprüche

1. Verfahren zum Herstellen von porösen Kohlenstofffasern, umfassend:
(a) Verarbeiten von Stärke, um eine gelierte Stärkelösung zu bereiten;
(b) Zugeben von organischer Säure zu der gelierten Stärkelösung, um eine Stärkelösung zu bereiten;
(c) Lösen von Kohlenstoff-Nanoröhren in einem Lösungsmittel und Zugeben von in Fasern-formbares Polymer dazu, um eine Kohlenstoff-Nanoröhren/in Fasern-formbares Polymer-Lösung zu bereiten;
(d) Mischen der Stärkelösung von Schritt (b) mit der Kohlenstoff-Nanoröhren/in Fasern-formbares Polymer-Lösung von Schritt (c), um eine Kohlenstoff-Nanoröhren/Stärke/in Fasern-formbares Polymer-Lösung zu bereiten, wobei das in Fasern-formbare Polymer der Stärke in einem Anteil in Gewichtsprozent von 5 : 5 bis 8 : 2 für Stärke : in Fasern-formbares Polymer zugegeben wird;
(e) Elektrospinnen oder Spinnen im nassen Zustand der bereiteten Kohlenstoff-Nanoröhren/Stärke/in Fasern-formbares Polymer-Lösung, um Stärke-Verbundfasern zu erzeugen;
(f) Oxidationserwärmen der Stärke-Verbundfasern, dann Durchführen einer Karbonisierung und einer Vakuum-Wärmebehandlung der erwärmten Fasern, um die porösen Kohlenstofffasern zu fertigen.

2. Verfahren nach Anspruch 1, wobei das Verarbeiten in Schritt (a) ein Erwärmen von Stärke bei 100 bis 150 °C und dann Abkühlen der selbigen auf Raumtemperatur umfasst.

3. Verfahren nach Anspruch 1, wobei die organische Säure in Schritt (b) mindestens eine ist ausgewählt aus einer Gruppe, bestehend aus p-Toluolsulfonsäure, Methansulfonsäure, Trifluormethansulfonsäure, Alkylbenzolsulfonsäure und p-Aminobenzolsulfonsäure.

4. Verfahren nach Anspruch 1, wobei das Lösungsmittel in Schritt (c) mindestens eines ist ausgewählt aus einer Gruppe, bestehend aus Wasser, Ethanol, Methanol, Dichlormethanol, Isopropanol, Aceton und Hexafluorisopropanol (HFIP).

5. Verfahren nach Anspruch 1, wobei das in Fasern-formbare Polymer in Schritt (c) mindestens eines ist ausgewählt aus einer Gruppe, bestehend aus Polyvinylalkohol, Polyethylenoxid, Polycarbonat, Polymilchsäure, Polyvinylcarbazol, Polymethacrylat, Celluloseacetat, Collagen, Polycaprolacton und Poly(2-hydroxyethylmethacrylat).

6. Verfahren nach Anspruch 1, wobei das Oxidationserwärmen in Schritt (f) bei 150 bis 300 °C durchgeführt wird.

7. Verfahren nach Anspruch 1, wobei die Karbonisierung in Schritt (f) bei 500 bis 1400 °C unter Vakuum oder einer Schutzgasatmosphäre durchgeführt wird.

8. Verfahren nach Anspruch 1, wobei die Vakuum-Wärmebehandlung in Schritt (f) bei 1400 bis 2200 °C durchgeführt wird.

9. Verfahren nach Anspruch 1, wobei die poröse Kohlenstofffaser eine große Menge an Mesoporen mit einem durchschnittlichen Durchmesser im Bereich von 5 bis 10 nm aufweist.

10. Poröse Kohlenstofffaser, hergestellt durch das Verfahren nach einem der Ansprüche 1 bis 9.

11. Filz, welcher die poröse Kohlenstofffaser nach Anspruch 10 umfasst.

12. Verwendung der porösen Kohlenstofffaser nach Anspruch 10 zum Herstellen einer Elektrode für einen Super-Kondensator mit hoher Kapazität.

13. Verwendung der porösen Kohlenstofffaser nach Anspruch 10 zum Herstellen einer Elektrode für eine Brennstoffzelle.

## Revendications

1. Procédé de fabrication de fibres de carbone poreux comprenant :
(a) le traitement de l'amidon pour préparer une solution d'amidon gélifiée ;
(b) l'ajout d'acide organique à la solution d'amidon gélifiée pour préparer une solution d'amidon ;
(c) la dissolution de nanotubes de carbone dans un solvant et l'ajout de polymère formable fibreux à ceux-ci pour préparer une solution de nanotubes de carbone/polymère formable fibreux ;
(d) le mélange de la solution d'amidon de l'étape (b) avec la solution de nanotubes de carbone/polymère formable fibreux de l'étape (c) pour préparer une solution de nanotubes de carbone/amidon/polymère formable fibreux, dans laquelle le polymère formable fibreux est ajouté à l'amidon, dans un rapport en pourcentage (%) en masse de 5:5 à 8:2 pour le mélange amidon:polymère formable fibreux ;
(e) l'électrofilage ou le filage humide de la solution de nanotubes de carbone/amidon/polymère formable fibreux pour produire des fibres composites d'amidon ;
(f) le chauffage par oxydation des fibres composites d'amidon puis la réalisation de la carbonisation et du traitement thermique sous vide des fibres chauffées, de façon à fabriquer les fibres de carbone poreux.

2. Procédé selon la revendication 1, dans lequel le traitement dans l'étape (a) inclut le chauffage de l'amidon entre 100 et 150°C puis le refroidissement de celui-ci à température ambiante.

3. Procédé selon la revendication 1, dans lequel l'acide organique dans l'étape (b) est au moins un choisi dans le groupe constitué par l'acide p-toluènesulfonique, l'acide méthanesulfonique, l'acide trifluorométhanesulfonique, l'acide alkylbenzènesulfonique et l'acide p-aminobenzènesulfonique.

4. Procédé selon la revendication 1, dans lequel le solvant dans l'étape (c) est au moins un choisi dans le groupe constitué par l'eau, l'éthanol, le méthanol, le dichlorométhanol, l'isopropanol, l'acétone et l'hexafluoroisopropanol (HFIP).

5. Procédé selon la revendication 1, dans lequel le polymère formable fibreux dans l'étape (c) est au moins un choisi dans le groupe constitué par l'alcool polyvinylique, l'oxyde de polyéthylène, le polycarbonate, l'acide polylactique, le polyvinylcarbazole, le polyméthacrylate, l'acétate de cellulose, le collagène, la polycaprolactone et le poly(méthacrylate de 2-hydroxyéthyle).

6. Procédé selon la revendication 1, dans lequel le chauffage par oxydation dans l'étape (f) est effectué entre 150 et 300 °C.

7. Procédé selon la revendication 1, dans lequel la carbonisation dans l'étape (f) est effectuée entre 500 et 1 400°C sous vide ou dans une atmosphère de gaz inerte.

8. Procédé selon la revendication 1, dans lequel le traitement thermique sous vide dans l'étape (f) est effectué entre 1 400 et 2 200°C.

9. Procédé selon la revendication 1, dans lequel la fibre de carbone poreux a une grande quantité de mésopores dont le diamètre moyen est compris entre 5 et 10 nm.

10. Fibre de carbone poreux fabriquée selon le procédé décrit dans l'une quelconque des revendications 1 à 9.

11. Feutre incluant la fibre de carbone poreux décrite dans la revendication 10.

12. Utilisation de la fibre de carbone poreux décrite dans la revendication 10 pour fabriquer une électrode pour un supercondensateur à haute capacité.

13. Utilisation de la fibre de carbone poreux décrite dans la revendication 10 pour fabriquer une électrode pour une pile à combustible.
